# EUROPEAN PATENT SPECIFICATION

(11) **EP 1 232 053 B1**
(45) Date of publication and mention of the grant of the patent: **18.02.2004**
(21) Application number: 00969576.8
(22) Date of filing: 30.10.2000
(51) Int. Cl.: B29C 47/12, B29C 47/32, C11D 13/18

(54) **PROCESS FOR THE MANUFACTURE OF SHAPED ARTICLES**
VERFAHREN ZUR HERSTELLUNG VON FORMTEILEN
PROCEDE DE FABRICATION D'ARTICLES FACONNES

(30) Priority: 23.11.1999 GB 9927682
(43) Date of publication of application: 21.08.2002
(73) Proprietor: UNILEVER PLC, London EC4P 4BQ (GB); UNILEVER N.V., 3013 AL Rotterdam (NL)
(72) Inventor: EDMONDSON, Brian Unilever Research Port Sunlight, Wirral Merseyside CH63 3JW (GB); IRVING, Graeme Neil Unilever Res. Port Sunlight, Wirral Merseyside CH63 3JW (GB)
(74) Representative: Elliott, Peter William
(86) International application number: PCT/EP2000/010738
(87) International publication number: WO 2001/038071

(56) References cited:
- DE-A- 19 831 540
- US-A- 3 134 832
- US-A- 4 879 063
- US-A- 5 102 588
- US-A- 5 190 770
- US-A- 5 350 290
- US-A- 5 673 612
- PATENT ABSTRACTS OF JAPAN vol. 2000, no. 03, 30 March 2000 (2000-03-30) & JP 11 341973 A (YANAGIYA:KK), 14 December 1999 (1999-12-14)
- DATABASE WPI Section Ch, Week 198530 Derwent Publications Ltd., London, GB; Class D23, AN 1985-180066 XP002158421 -& JP 60 106900 A (YOSHIDA Y), 12 June 1985 (1985-06-12)
- PATENT ABSTRACTS OF JAPAN vol. 009, no. 272 (M-425), 30 October 1985 (1985-10-30) & JP 60 116433 A (MEIJI SEIKA KK), 22 June 1985 (1985-06-22)

## Description

### TECHNICAL FIELD

The present invention relates to an extrusion process and apparatus for forming a shaped article from a plastic material. In particular, it relates to a process and apparatus for forming a shaped detergent bar.

### BACKGROUND

A conventional method for the manufacture of detergent bars is milling followed by extrusion ("plodding") and stamping. In such a process, a pre-formed composition comprising all components of the bar is typically plodded, i.e. extruded through an eye-plate, to form a continuous "rod", and the continuous rod cut into smaller pieces of predetermined length, commonly referred to as "billets". These billets are then fed to a stamper, or alternatively, and especially in the production of low cost non-soap detergent (NSD) bars, are merely given an imprint on one or more surfaces. Such embossing or imprinting may be achieved using a die of the same dimensions as the bar surface which is hit with force, such as with a mallet, or a die in the shape of a roller.

Stamping of detergent bars using a die is carried out to give the bars a reproducible shape, smooth surface and/or to imprint a design such as a logo, trade mark or similar onto at least part of a surface of the bar. Stampers typically have a die formed in two halves each with a surface that contacts the billet during the stamping operation. These surfaces are adapted to close to a pre-set separation distance, thereby compressing the billet between the die halves to give the bar its final shape and appearance, and then separate. Excess composition is squeezed out from the die halves as they close. This is commonly referred to as the "flash". The flash is then separated from the soap bar by transferring the bar through holes in a "deflashing plate". Flash can account for up to 40% of the billet material and is generally recycled back into the milling step.

The pressures exerted by stamper dies on detergent billets are typically much higher than those employed in simple embossing of a logo. Two common problems, which are experienced with stamping processes, are poor release of the bars from the dies and die-blocking. In die-blocking, small amounts of residual detergent left on dies builds up during continued use, which can result in visible imperfections on the bar surface. Die-blocking can also lead to poor or even non-release of the bars from the die surface.

The range of products that can be produced by stamping is limited. In order to be stamped, the billets must be substantially "solid" so they can be readily conveyed and fed to the stamper and yet sufficiently plastic to be deformed in the stamping process. In particular, the detergent composition must not be too soft and sticky. However, the stamping process itself has a tendency to lead to softer and more sticky material as the detergent composition in the form of recycled flash is exposed to repeated work and shear.

Stamping can also be a limiting factor with respect to the speed of a bar finishing line. This is due to a combination of the handling difficulties encountered when employing a stamping process and die-blocking. Handling difficulties include the multiple steps that are inevitably involved, i.e. the preparation of the billets, conveying to and feeding into the stamper, the stamping step and the deflashing step.

Many stamping devices contain some sort of ejecting means to aid release of the formed bars, however, numerous other solutions to the problems of die-blocking and poor die release have been proposed. All these solutions have focused on adaptation of the stamping device. There is still a great need for a process and apparatus that either reduces the problems associated with stamping, or negates the need for a stamping process altogether.

We have now found that the problems associated with stamping, and in particular those associated with die blocking and the production and repeated reworking of excessive flash material, can be significantly reduced if the detergent composition is extruded through an extruder die containing an orifice whose cross-sectional area is varied as the composition passes through the die thus imparting a suitable shape on the bar. If fact, we have now found that the need for a stamping step in an extrusion and stamping process can be negated by use of such a process.

It is known to shape a moulded tubular item such as a plastics door seal or weather strip by means of a moveable tool which acts downstream of the extrusion nozzle which shapes the extrudate. This is described in US-A-5 162 090, EP-A-0 081 093 and GB-A-2 206 839.

Extruded hoses for automobiles may be caused to have varying diameters by means of movable obdurators which act upon the extruded tube, as disclosed in GB-A-2 282 099.

It is also known to shape the cross-section of extruded thermoplastics items by means of an elastomerically deformable nozzle, as disclosed in US-A-3 134 832. A similar concept applicable to food products is known from US-A-3 840 311. Variable iris diaphragms are disclosed in GB-A-1 149 423. Here, the extruded article is a cylindrical workpiece of a curable plastics material having finely divided metal particles dispersed therein.

JP 11 341 973 describes a technique for successively extruding and forming a fish paste to form shapes thus avoiding the use of forming molds.

JP 60 106 900 describes a method for shaping a soap bar which comprises an extrusion step followed by a stamping step.

### DEFINITION OF THE INVENTION

In a first aspect, this invention provides a process for the production of a shaped article of a consumable product in which a composition in an extrudable form is extruded through a die comprising at least one orifice characterised in that the cross-sectional area for flow through the said at least one orifice is varied continuously during at least part of the time said extrusion is occurring, whereby an extrudate is obtained whose cross-sectional area varies along at least a part of its length.

In a second aspect, an extruding apparatus for forming shaped articles comprising an extruder die which includes at least one orifice, the cross sectional area of which may be varied in use, means for applying pressure to a composition which is in an extrudable form to extrude the composition through the at least one orifice, and means for continuously varying the volumetric flow rate of the composition fed to the orifice during at least part of the time said extrusion is occurring.

In a third aspect, this invention provides for a consumable product such as detergent bar obtainable by the process of the invention.

### DETAILED DESCRIPTION OF THE INVENTION

Any reference hereafter to a die is understood to be to an extruder die, unless specified otherwise. An extruder die is a die through which material is extruded, the die imparting shape on the extrudate. For the avoidance of doubt, an extruder die does not include a stamping die.

### Means for applying pressure

In the extrusion process of the invention, a means of applying pressure to the composition to be extruded to drive it through the die orifice is required.

In the extrusion process of the invention, the means for applying pressure to the composition can be any device capable of containing composition and of applying pressure to the composition so at to drive it through the die comprising the orifice, i.e. extrude it.

Reference herein to continuous variation of the volumetric flow rate for at least part of the extrusion period is intended to refer to a gradual (progressive) increase and/or decrease in that flow rate as opposed to an abrupt or step-change in flow rate. However, one or more such abrupt changes may also be employed in addition to the continuous variation.

The variation may for example be effected by varying the pumping rate, e.g. by control of the pumping means. The variation may also be effected by causing the extrudate to pass through a chamber, the internal volume of which is varied. This volume variation may conventionally be effected by having a telescopic arrangement of two or more tubular members such that the length of the chamber can be varied. A piston/cylinder arrangement communicating with the inside of the chamber may also be employed, or a resilient collar, deformable by external fluid pressure can also be used to vary the internal volume of the chamber.

In this respect, the present invention can utilise conventional detergent bar manufacturing equipment. The conventional method for manufacturing shaped detergent bars by extrusion involves milling, extrusion and stamping.

The function of the milling process is to homogenise and shear work the composition, the raw materials of which might be in the form of loose aggregates, chips or flakes, to produce the required degree of homogeneity and phase structure. Milling is also used to "remove" any gritty particles from the detergent composition. After milling, the detergent composition in homogenised and worked form is either fed to the extruding apparatus or formed into pellets or noodles which are either stored as intermediates or fed to the extruding apparatus. The milling step is often carried out in what is referred to as a "refiner".

The function of the extrusion process is to form the composition into bars or billets of required cross-section, which can then be stamped into bars of required shape. An extruding apparatus performing this function is often referred to as a "simple plodder".

The most common forms of apparatus used for both milling and plodding are screw extruders. Indeed, the same screw extruder may perform both functions.

The simplest forms of screw extruders have a single screw. The feed stock, either in homogenised and worked form or in the form of loose aggregates, chips, pellets, noodles or (recycled) bars is fed into the extruder barrel, generally via a hopper, where it fills the annular space between the extruder worm (screw) and the barrel. In normal practice the barrel is stationary and the worm rotates inside the barrel. Frictional/viscous drag forces act on the material, both at the barrel as well as at the worm surfaces. The resultant force is responsible for the forward transportation of the processed mass like a stationary nut on a rotating bolt towards the discharge end. At the discharge end, the extruder may have a perforated plate, through which the processed mass is forced. This is generally known as the "noodler" plate. The processed mass emerges in the form of rods/ribbons/sheets from the perforated plate.

If the objective is to produce chopped noodles or pellets for intermediate storage or to serve as a feed for subsequent process step then a suitable cutter is provided at the discharge end to chop the extrudates into smaller pieces. If the objective is to form the mixed mass into billets or bars, then, in a conventional process a cone and eye-plate are provided at the discharge end of the extruder, optionally with the perforated plate. The extruder forces the mixed mass through these end fittings to produce a continuous rod which is cut into billets for stamping. Designs of perforated plates, cones and eye-plates vary considerably from application to application.

Machines called duplex or twin worm plodders have two worms (or screws) which are parallel, non-intermeshing and mounted tangentially with respect to each other within a barrel. The worms may be co-rotating but usually they are counter-rotating. Intermeshed counter and co-rotating twin screw extruders are also known for processing of soap/detergent mass. In the case of non-intermeshed duplex plodders drag forces similar to those encountered in single worm plodders act on the processed mass and push the same in the forward direction. In the case of intermeshed twin screw extruders, this process is assisted by the intermeshing of the two screws.

Thus, the present invention can utilise conventional detergent bar manufacturing equipment, suitably modified, for example by replacing the eye-plate at the discharge end of the extruder with an extruder die comprising an orifice through which the cross-sectional area for flow can be varied in use.

Thus, in one embodiment of the invention, the pressure applying means in the extrusion process and apparatus comprises a screw extruder, preferably a twin screw extruder.

Other suitable types of apparatus that lend themselves to applying pressure to the detergent composition include positive displacement pump-type arrangements, such as, for example, piston pumps, gear pumps and lobe pump-type arrangements in addition to conventional screw extruders.

The most preferred pressure applying means in the process and apparatus of the invention is a positive-displacement pump, such as, for example a simple ram extruder. A ram extruder typically comprises a reservoir or barrel for the detergent composition, a plunger for applying pressure to the material in the reservoir and outlet through which the detergent composition is driven.

In another preferred embodiment, the pressure applying means comprises a cone at the discharge end, optionally preceded by a perforated plate.

Conventional detergent bar manufacturing equipment can also be used to feed detergent material to a separate pressure applying means. For example, and in a preferred embodiment, detergent material, preferably in the form of noodles or pellets, is fed from a screw extruder to a positive-displacement pump.

### Extruder die

The extruder die used in accordance with this invention is defined as having at least one orifice whose cross-sectional area for flow may be varied as the extrudate flows through.

The die may have more than one orifice so long as at least one orifice is of the variable type. If there is more than one orifice, it is preferred that all the orifices are of the variable type.

Furthermore, if the die contains more than one orifice, then preferably all orifices are substantially in the same plane. For example, an orifice may typically be defined by adjacent parallel parts which overlap, the amount of overlap determining the cross-sectional area for flow. Such parts are considered to be substantial in the same plane.

In dies containing more than one variable orifice, the cross-sectional areas of the variable orifices can be co-ordinated such that the sum of the cross-sectional areas remains substantially constant as the detergent composition passes through the die.

The die may be of such design that its volume can be increased or decreased during the extrusion process in that section of the die which precedes the orifice with respect to the direction of extrusion. For example, the die can be of a telescopic design in that portion of the die. Other die designs can be used as will be apparent to the skilled person.

In a preferred embodiment, the temperature of at least part of the die is controlled during the extrusion process. This may or may not include controlling the temperature of the orifice. This can improve the surface finish of the extrudate. Heating is especially preferred where the extrudate from the die is substantially in final bar form, i.e. there is to be little or no further processing steps. Suitable means for heating are well known to the person skilled in the art.

### Variable Orifice

The "cross-sectional area" of a variable orifice is defined as the cross-sectional area defined by the orifice through which the detergent composition is extruded and which imparts shape on the extrudate.

The orifice must be of such construction that its cross-sectional area can be varied during the extrusion process. Preferably, the surface(s) which impinge upon the extrudate are relatively sharp, or knife-like surfaces, or at least are blunt prisms or are bevelled.

In one embodiment, the orifice is constructed, at least in part, of a material which can be deformed by the application of an external pressure so as to vary its cross-sectional area. Suitable deformable materials include rubber and other elastomers.

In another embodiment, the orifice is constructed of at least two parts which define its cross-sectional area and at least one part can be moved relative to the other so as to vary its cross-sectional area.

In a preferred embodiment, the orifice is of an iris diaphragm construction, i.e. it comprises an adjustable diaphragm of overlapping parts at least two of which can move relative to each other so as to vary its cross-sectional area.

The movement or deformation of the orifice so as to vary its cross-sectional area can be achieved using any suitable arrangement. For example, a suitable arrangement of cams or the use of hydraulically driven pistons may be used to vary the orifice.

As the cross-sectional area of an orifice is varied as detergent composition flows though it, the cross-sectional area of the extrudate is also varied. Thus by varying the cross-sectional area of an orifice in a controlled fashion, shaped extrudate is obtained.

Preferably, the cross-sectional area for flow through any variable orifice is varied in a cyclic manner such that extrudates of regular repeating shape are formed. More preferably, the cross-sectional area for flow through any variable orifice is varied in a cyclic manner such that the extrudate is in substantially final bar form, i.e. there is to be little or no further processing steps. The extrudate can be cut into individual bars or billets either by appropriate constriction of the orifice or a separate cutting step can be used. A logo can then be imprinted onto the bar if required. The force required to mark a bar with a logo is far less than that required for conventional stamping and so does not negate the benefits of avoiding the need for conventional stamping.

Alternatively, the extrudate can be further processed. For example, the shaped extrudate can be marked with a logo and/or stamped in a conventional manner to finalise the shape of the bars. The process of partially pre-shaping the extrudate provided by the present invention confers significant advantages when employing a stamping step. Stamping involves squeezing out excess composition from the die halves as they close. If the bar is already partially shaped, then the amount of excess, i.e. flash material, is reduced and the compression force required in the stamping step is reduced. Reducing the amount of flash material means that less material is recycled and reworked. Thus the problems of the detergent composition becoming overly soft and sticky are alleviated to a great extent.

### Extrusion process

The volumetric flow rate of material entering the extruder die, i.e. the volumetric flow rate of material being fed by the pressure applying means to the die, is hereinafter referred to as the primary volumetric flow rate.

The volumetric flow rate of material passing through the orifice or orifices is hereinafter referred to as the secondary volumetric flow rate.

In the process of the invention, it is highly preferred that the primary volumetric flow rate is kept substantially constant In this respect, a positive-displacement device such as a ram is very well suited to the invention.

in the process of the invention it is also highly preferred that secondary volumetric flow rate is varied during the extrusion process.

It is also preferred that fluctuations in the extrusion pressure, i.e. the pressure at the entrance to the die, are minimised throughout the extrusion process.

The volume of the die may be increased and decreased as described previously. This is especially useful with respect to maintaining a substantially constant primary volumetric flow rate whilst varying the secondary volumetric flow rate. Furthermore, it can be used to minimise fluctuations in extrusion pressure throughout the process.

In dies containing more than one variable orifice, the cross-sectional areas of the variable orifices can be co-ordinated such that the sum of the cross-sectional areas remains substantially constant as the detergent composition passes through the die; this will also help to reduce fluctuations in the extrusion pressure.

If the total cross-sectional area for flow does vary during the extrusion process, it is preferred that the total cross-sectional area for flow through the orifice or orifices and the secondary volumetric flow rate are controlled with respect to each other such that variations in the extrusion pressure are minimised, especially as the area for flow through the orifice or orifices tends to zero, and excessive pressures are not generated in the extruder die.

### The Consumable Product

The process and apparatus according to the present invention enable manufacture of shaped articles of consumable products as opposed to semi-permanent products such as plastics mouldings.

Consumable products include foods, compositions for household or personal cleaning, compositions for personal washing or hygiene, cosmetic products, as well as pharmaceutical compositions.

### (i) Detergent bars

By "detergent bar" is meant a tablet, cake or bar in which the level of surface active agent, which comprises soap, synthetic detergent active or a mixture thereof, is at least 5% by weight, more preferably at least 10% by weight, based on the bar.

### Detergent compositions

As will be apparent to the person skilled in the art, the extrusion process of this invention requires that the extrudate be in a substantially "solid" but extrudable form.

Nevertheless, the process of the invention allows a far wider range of formulations to be formed into shaped detergent bars than is possible using the conventional milling, plodding and stamping process.

### (ii) Other applications

Although the present invention is primarily directed at the production of shaped detergent compositions, it will be apparent to the person skilled in the art that the process and apparatus of the present invention may be useful in the manufacture of other types of shaped articles of consumable products. This is particularly the case where an extrusion process and/or a stamping process is currently employed in the manufacturing process or even where the starting composition exists in a plastic form suitable for extrusion. Suitable applications may, for example, include the manufacture of various food products, including confectionery.

### Brief description of the drawings

The present invention will further be described, by way of example only, with reference to the accompanying drawings, in which:
Figure 1 shows an extruder die for use in the process of the invention comprising a variable orifice formed from an elastomeric material;
Figure 2 shows another extruder die for use in the process of the invention whose volume can be adjusted and comprising an orifice made up of two parts;
Figure 3 shows another extruder die for use in the process of the invention comprising two orifices;
Figure 4 shows another extruder die for use in the process of the invention, in which a variable orifice is formed from overlapping openings in two or more rotating discs; and
Figure 5 shows another extruder die for use in the process of the invention, in which two or more cylinders with parallel axes of rotation are rotated on axes normal to the direction of extrusion.

### Detailed description of the drawings

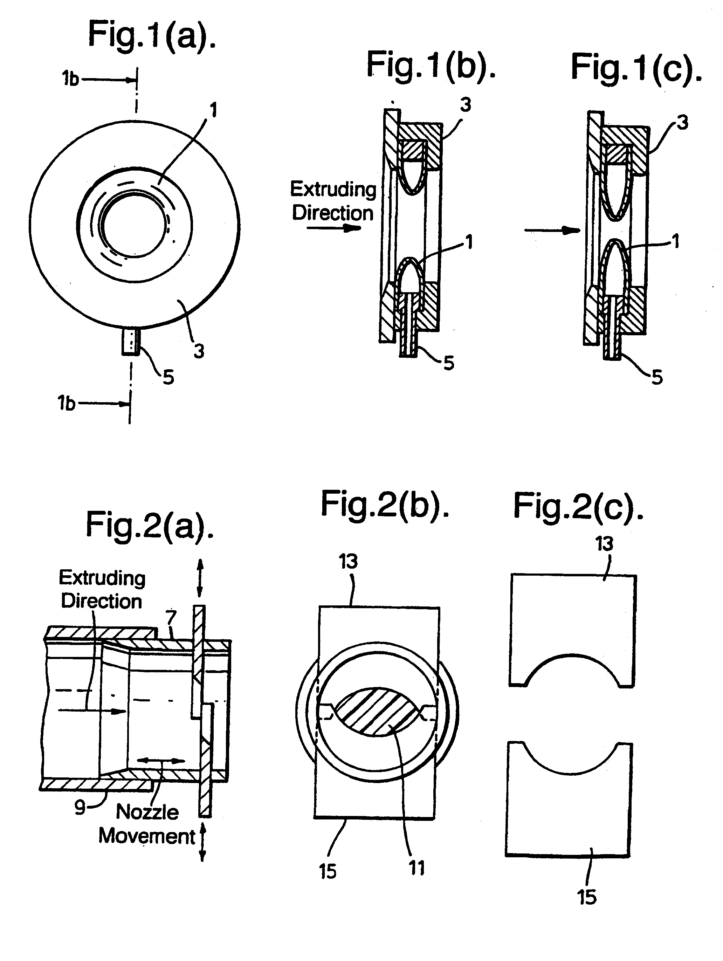

Figure 1 shows an extruder die comprising a variable orifice formed from an elastomeric material. Figure 1 (a) is an end-on view of the die, whilst Figures 1(b) and 1(c) are sectional views of the same die, with the orifice opening reduced in Figure 1 (c). The extruding direction is represented by (X). The orifice comprises a ring made of a deformable material 1 such as an elastomer enclosed in a metal support 3. The ring is inflated by application of a pressurised fluid via opening 5. Since the outer surface of the ring is constrained by the metal of the die extruder this results in a reduction in the size of the orifice opening inside the ring.

Figure 2 shows an extruder die consisting of an orifice defined by two moving parts. Figure 2(a) is a sectional view of the die constructed from an inner cylinder 7 and an outer cylinder 9, the inner cylinder being able to slide in or out of the outer cylinder as indicated by the arrow (N), along the direction of extrusion, represented by (X), allowing the die volume to be increased or decreased. As will be understood from the foregoing text, this movement provides a means for the accumulation of material within the die thereby accommodating the instantaneous variations and differences in the primary and secondary volumetric flow rates. Figures 2(b) and 2(c) show end views of the die in which the orifice opening area 11 is defined and controlled by two respective sliding plates 13, 15. These plates are designed to cross one another and can be completely closed off resulting in separation of the extrudate into individual bars. The timing of the two motions i.e. the change in area of the orifice and the axial sliding of the cylinder are co-ordinated to produce the desired 3-dimensional shape of the bar and to eliminate excessive pressure generation when the orifice area is zero. At this latter position the outward movement of the cylinder would match the volume throughput of the extruder.

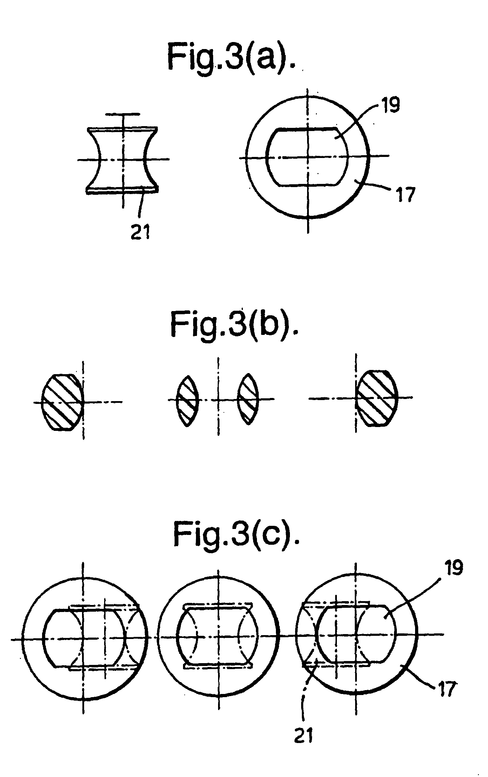

Figure 3 shows an extruder die design with twin variable orifices. Figure 3(a) shows the two parts defining the orifices. These consist of a main end plate 17, with an open area 19, and a sliding centre plate 21. As the centre plate 21 is reciprocated across the end plate 17, the opening in one orifice is reduced whilst the opening in the other orifice is increased. Thus the total cross-sectional area for flow remains constant or near constant Figure 3(b) shows the extrudate cross-section produced for each of the three slider positions shown in figure 3(c).

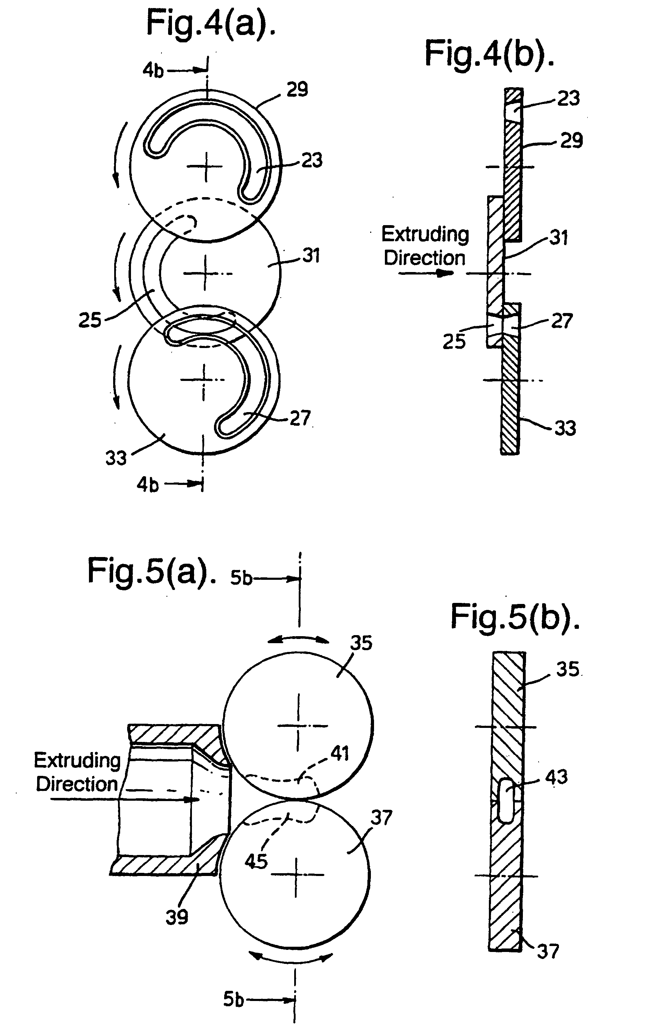

Figure 4 shows a design in which the variable orifice is formed from overlapping openings 23, 25, 27 in respectively rotating discs 29, 31, 33. Figure 4(a) is an end view. Figure 4(b) is a sectional view. The extruding direction is represented by (X).

Figure 5 shows a design in which two or more wheels or cylinders 35, 37, with parallel axes of rotation, are rotated on axes normal to the direction of extrusion from a nozzle 39, represented by (X), either with or against the flow of extrudate or a combination of the two. Figure 5(a) is a sectional side view. Figure 5(b) is a sectional end view. The edges of the cylinders are contoured in 3 dimensions such that respective gaps 41, 43 between the wheels form an orifice 45 (or a number of orifices spaced axially along the cylinders) whose opening area changes with rotation of the wheels. An advantage of this design of die extruder is that a logo may be incorporated directly into the bar. Further cooling or heating may be applied to the surfaces of the extrudate.

In a preferred embodiment of this design the Wheels/cylinders are rotated such that their surfaces alternately move with and against the direction of flow of the extrudate such that the cross-sectional area for flow of the extrudate through the orifice(s) formed by the wheels/cylinders increases and decreases correspondingly. The velocity of the wheels or cylinders is controlled such that the velocity of detergent adjacent to the forming surface of the wheels at the nip position is greater than or equal to the wheel velocity at that point in the direction of flow. In other words the wheel is wiped by the extrudate flowing through it.

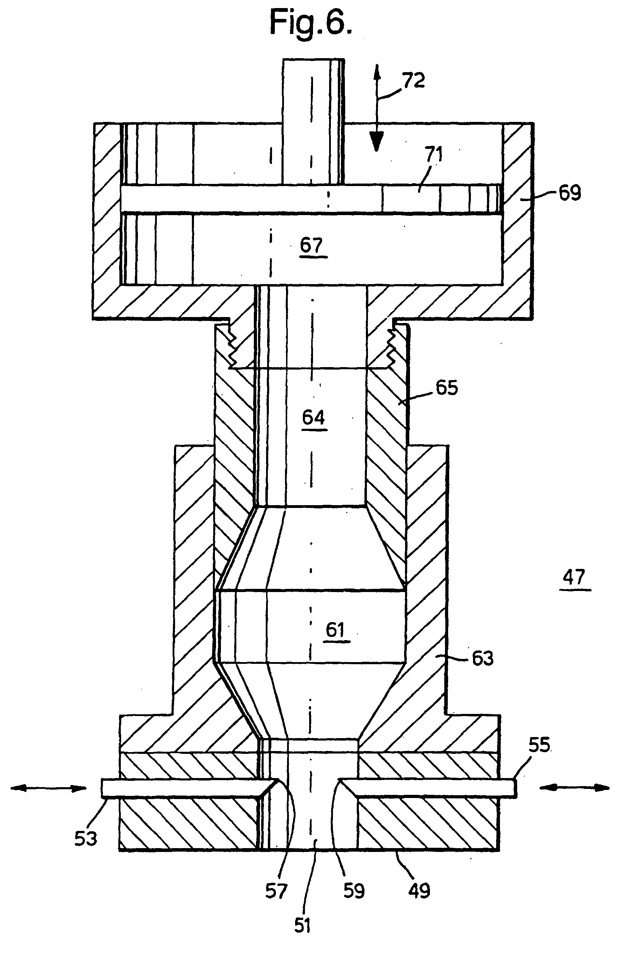

As shown now in Figure 6, a basic extrusion head 47 is attached to a variable cross-section die orifice 49. This die comprises an opening 51, the cross-section of which is varied by sliding plates 53, 55 which move in the direction of the arrows. The sliding plates have respective "knife" edges 57, 59 which impinge upon the extrudate.

As illustrated, the opening of 51 of the orifice 49 communicates with a first chamber 61 of a first tubular member 63. The first chamber 61 of this first member in turn communicates with a second chamber 64 of a second tubular member 65, rigidly connected with the first tubular member 63. The second chamber, in turn, communicates with the inside 67 of a cylinder 69, in which a piston 71 is slidably engaged (denoted by arrow) to pump the extrudate (not shown).

Various different ways of varying the volumetric flow rate of the extrudate delivered to the orifice 49 will now be described.

First, as shown in Figure 6, the volumetric flow rate may be varied by varying the speed of the stroke of the piston 71 and/or causing it to reciprocate as denoted by arrow 72.

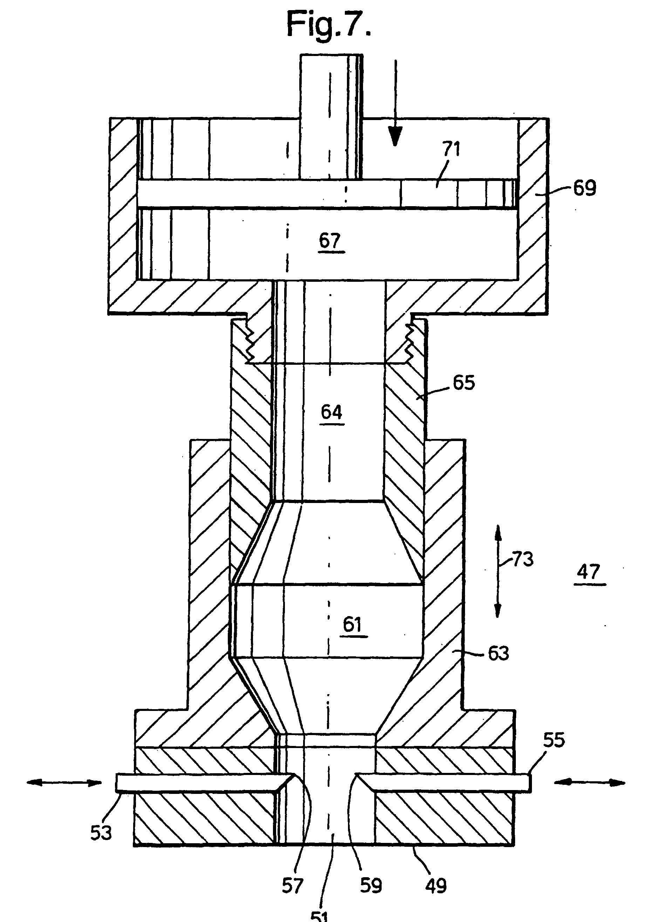

As shown in Figure 7, the volumetric flow rate may be varied by relative telescopic motion between the first tubular member 63 and the second tubular member 65, as denoted by the arrow 73.

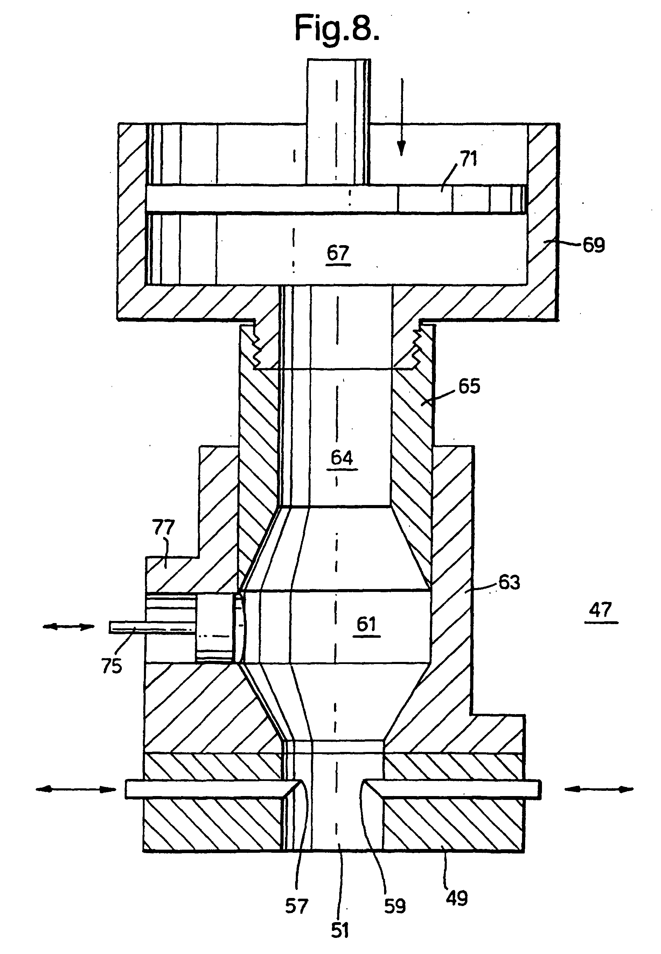

As shown in Figure 8, the volumetric flow rate may also be changed by action of a piston 75 sliding within a slide cylinder 77 communicating with the first chamber 61 of the first tubular member 63 (piston motion denoted by arrow).

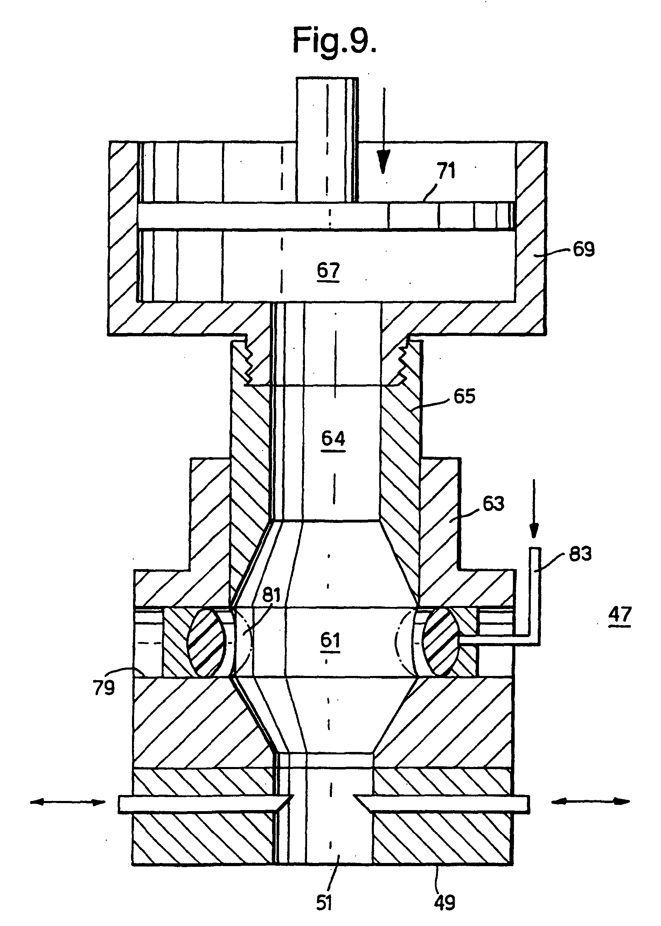

Another alternative is shown in Figure 9. An annular groove 79 is formed in the wall of the first tubular member 61. A resilient annular member 81 seals this groove but the degree to which it extends into the first chamber 61 is varied by pneumatic pressure delivered from a pneumatic line 83.

## Claims

1. A process for the production of a shaped detergent bar in which a detergent composition in an extrudable form is extruded through a die comprising at least one orifice **characterised in that** the cross-sectional area for flow through the said at least one orifice is varied continuously during at least part of the time said extrusion is occurring, whereby detergent extrudate is obtained whose cross-sectional area varies along at least a part of its length, and wherein the volumetric flow rate is varied by varying the internal volume of a chamber through which the extrudate is delivered to the nozzle.

2. A process according to claim 1, wherein the volumetric flow rate is varied by varying the pumping rate used to deliver the extrudate to the nozzle.

3. A process according to any preceding claim, in which the orifice is constructed at least in part from an elastically deformable material.

4. A process according to any preceding claim, in which the orifice is constructed of at least two parts which define its cross-sectional area and at least one part can be moved relative to the other so as to vary its cross-sectional area.

5. A process according to claim 4, in which the orifice is of an iris diaphragm construction.

6. A process according to claim 4, in which the orifice is constructed of at least two adjacent cylinders, the cylinders having substantially parallel axes of rotation and being positioned so their circumferential surfaces are in contact, the axes of rotation being substantially normal to the direction of extrusion, the orifice being defined by a contoured region of the circumferential surface of at least one of the cylinders, the cross sectional area defined by the said contoured region or regions varying with the rotation of the cylinders.

7. A process according to any preceding claim, in which a primary volumetric flow rate is kept substantially constant during extrusion.

8. A process according to any preceding claim, in which a secondary volumetric flow rate is varied during extrusion.

9. A process according to any preceding claim, in which the die comprises more than one orifice whose cross-sectional area for flow is varied during extrusion.

10. A process according to claim 7, in which the cross-sectional areas of the orifices are co-ordinated such that the sum of the cross-sectional areas remains substantially constant during extrusion.

11. A process according to claims 1 to 7, in which the total cross-sectional area for flow through the orifice or orifices and the secondary volumetric flow race are controlled with respect to each other.

12. A process according to any preceding claim, in which the temperature of at least part of the die is controlled during the extrusion process.

13. A process according to any preceding claim, in which the composition in extrudable form is a soap.

14. A process according to any preceding claim, in which the composition in extrudable form is a synthetic detergent active.

15. An extruding apparatus for forming shaped articles comprising an extruder die which includes at least one orifice, the cross-sectional area of which may be varied in use, means for applying pressure to a composition which is in an extrudable form to extrude the composition through the at least one orifice, and means for continuously varying the volumetric flow rate of the composition fed to the orifice during at least part of the time said extrusion is occurring, wherein the volumetric flow rate is varied by varying the internal volume of a chamber through which extrudate is delivered to the nozzle.

16. An apparatus according to claim 16, wherein the means for continuously varying the volumetric flow rate comprises means for varying the pumping rate of the means for applying pressure.

17. An apparatus according to claim 16, wherein the means for continuously applying pressure comprises means for varying the internal volume of a chamber through which the extrudate is delivered to the nozzle from the means for applying pressure.

18. An apparatus according to any of claims 15-17, in which the means for applying pressure comprises a positive-displacement pump.

## Patentansprüche

1. Verfahren zur Herstellung eines geformten Detergensriegels, bei dem eine Detergenszusammensetzung in einer extrudierbaren Form durch eine Düse extrudiert wird, die mindestens eine Öffnung umfasst, **dadurch gekennzeichnet, dass** die Querschnittsfläche für den Durchfluss durch die mindestens eine Öffnung während mindestens eines Teils der Zeit, in der die Extrusion stattfindet, kontinuierlich verändert wird, wodurch man Detergensextrudat erhält, dessen Querschnittsfläche mindestens entlang eines Teils seiner Länge variiert, und wobei der Volumendurchsatz verändert wird, indem das Innenvolumen einer Kammer verändert wird, durch die das Extrudat zur Düse zugeführt wird.

2. Verfahren nach Anspruch 1, bei dem der Volumendurchsatz durch Veränderung der zum Zuführen des Extrudats zur Düse benutzten Pumpgeschwindigkeit verändert wird.

3. Verfahren nach einem vorangehenden Anspruch, bei dem die Öffnung mindestens teilweise aus einem elastisch verformbaren Material konstruiert wird.

4. Verfahren nach einem vorangehenden Anspruch, bei dem die Öffnung aus mindestens zwei Teilen konstruiert wird, die ihre Querschnittsfläche begrenzen, und mindestens ein Teil in Bezug zum anderen bewegt werden kann, so dass ihre Querschnittsfläche verändert wird.

5. Verfahren nach Anspruch 4, bei dem die Öffnung von einer Irisblendenkonstruktion ist.

6. Verfahren nach Anspruch 4, bei dem die Öffnung aus mindestens zwei benachbarten Zylindern konstruiert wird, wobei die Zylinder im Wesentlichen parallele Drehachsen aufweisen und so angeordnet sind, dass sich ihre Umfangsflächen berühren, wobei die Drehachsen zur Extrusionsrichtung im Wesentlichen senkrecht sind, wobei die Öffnung durch einen profilierten Bereich der Umfangsfläche von mindestens einem der Zylinder begrenzt wird, wobei sich die von dem profilierten Bereich oder den profilierten Bereichen begrenzte Querschnittsfläche mit der Drehung der Zylinder verändert.

7. Verfahren nach einem vorangehenden Anspruch, bei dem ein primärer Volumendurchsatz während der Extrusion im Wesentlichen konstant gehalten wird.

8. Verfahren nach einem vorangehenden Anspruch, bei dem ein sekundärer Volumendurchsatz während der Extrusion verändert wird.

9. Verfahren nach einem vorangehenden Anspruch, bei dem die Düse mehr als eine Öffnung umfasst, deren Querschnittsfläche für den Durchfluss während der Extrusion verändert wird.

10. Verfahren nach Anspruch 7, bei dem die Querschnittsflächen der Öffnungen so koordiniert werden, dass die Summe der Querschnittsflächen während der Extrusion im Wesentlichen konstant bleibt.

11. Verfahren nach den Ansprüchen 1 bis 7, bei dem die Gesamtquerschnittsfläche für den Durchfluss durch die Öffnung oder Öffnungen und der sekundäre Volumendurchsatz in Bezug zueinander gesteuert werden.

12. Verfahren nach einem vorangehenden Anspruch, bei dem die Temperatur von mindestens einem Teil der Düse während des Extrusionsverfahrens gesteuert wird.

13. Verfahren nach einem vorangehenden Anspruch, bei dem die Zusammensetzung in extrudierbarer Form eine Seife ist.

14. Verfahren nach einem vorangehenden Anspruch, bei dem die Zusammensetzung in extrudierbarer Form ein synthetischer Detergenswirkstoff ist.

15. Extrudiervorrichtung zur Bildung von geformten Gegenständen, umfassend eine Extruderdüse, die mindestens eine Öffnung enthält, deren Querschnittsfläche im Gebrauch verändert werden kann, eine Einrichtung zum Aufbringen von Druck auf eine Zusammensetzung, die in einer extrudierbaren Form vorliegt, um die Zusammensetzung durch die mindestens eine Öffnung zu extrudieren, und eine Einrichtung, um den Volumendurchsatz der zur Öffnung zugeführten Zusammensetzung während mindestens eines Teils der Zeit, in der die Extrusion stattfindet, kontinuierlich zu verändern, wobei der Volumendurchsatz verändert wird, indem das Innenvolumen einer Kammer verändert wird, durch die Extrudat zur Düse zugeführt wird.

16. Vorrichtung nach Anspruch 16, bei der die Einrichtung zum kontinuierlichen Verändern des Volumendurchsatzes eine Einrichtung zum Verändern der Pumpgeschwindigkeit der Einrichtung zum Aufbringen von Druck umfasst.

17. Vorrichtung nach Anspruch 16, bei der die Einrichtung zum kontinuierlichen Aufbringen von Druck eine Einrichtung zum Verändern des Innenvolumens einer Kammer umfasst, durch die das Extrudat aus der Einrichtung zum Aufbringen von Druck zur Düse zugeführt wird.

18. Vorrichtung nach einem der Ansprüche 15-17, bei der die Einrichtung zum Aufbringen von Druck eine Verdrängerpumpe umfasst.

## Revendications

1. Procédé pour la production d'un pain détergent façonné, dans lequel une composition détergente sous forme extrudable est extrudée à travers une filière comprenant au moins un orifice, **caractérisé en ce que** la superficie de la section pour l'écoulement à travers ledit au moins un orifice varie en continu pendant au moins une partie du temps pendant lequel ladite extrusion est effectuée, moyennant quoi on obtient l'extrudat détergent dont la superficie de section varie le long d'au moins une partie de sa longueur et dans lequel on fait varier le débit volumétrique en faisant varier le volume interne d'une chambre à travers laquelle l'extrudat est amené à la buse.

2. Procédé selon la revendication 1, dans lequel on fait varier le débit volumétrique en faisant varier le débit de pompage utilisé pour amener l'extrudat à la buse.

3. Procédé selon l'une quelconque des revendications précédentes, dans lequel l'orifice est construit au moins en partie dans une matière élastiquement déformable.

4. Procédé selon l'une quelconque des revendications précédentes, dans lequel l'orifice est constitué d'au moins deux parties qui définissent sa superficie de section et au moins une partie peut être déplacée par rapport à l'autre afin de faire varier sa superficie de section.

5. Procédé selon la revendication 4, dans lequel l'orifice est une construction formant un diaphragme à iris.

6. Procédé selon la revendication 4, dans lequel l'orifice est constitué d'au moins deux cylindres adjacents, les cylindres ayant des axes de rotation sensiblement parallèles et étant positionnés de manière à ce que leurs surfaces circonférentielles soient en contact, les axes de rotation étant sensiblement perpendiculaires au sens d'extrusion, l'orifice étant défini par une région profilée de la surface circonférentielle d'au moins l'un des cylindres, la superficie de section définie par ladite région profilée ou les régions profilées variant avec la rotation des cylindres.

7. Procédé selon l'une quelconque des revendications précédentes, dans lequel un débit volumétrique primaire est maintenu sensiblement constant pendant l'extrusion.

8. Procédé selon l'une quelconque des revendications précédentes, dans lequel on fait varier un débit volumétrique secondaire pendant l'extrusion.

9. Procédé selon l'une quelconque des revendications précédentes, dans lequel la filière comprend plus d'un orifice dont on fait varier la superficie de section pour l'écoulement pendant l'extrusion.

10. Procédé selon la revendication 7, dans lequel les superficies de section des orifices sont coordonnées de telle manière que la somme des superficies de section reste sensiblement constante pendant l'extrusion.

11. Procédé selon la revendication 7, dans lequel la superficie de section totale pour l'écoulement à travers l'orifice ou les orifices et le débit volumétrique secondaire sont régulées l'un par rapport à l'autre.

12. Procédé selon l'une quelconque des revendications précédentes, dans lequel la température d'au moins une partie de la filière est régulée pendant l'opération d'extrusion.

13. Procédé selon l'une quelconque des revendications précédentes, dans lequel la composition sous forme extrudable est un savon.

14. Procédé selon l'une quelconque des revendications précédentes, dans lequel la composition sous forme extrudable est une matière active synthétique détergente.

15. Appareil d'extrusion pour former des articles façonnés, comprenant une filière d'extrusion qui comprend au moins un orifice dont on peut faire varier la superficie de section en cours d'utilisation, un moyen pour appliquer la pression sur une composition qui se trouve sous forme extrudable pour extruder la composition à travers le au moins un orifice, et un moyen pour faire varier en continu le débit volumétrique de la composition amenée dans l'oritice pendant au moins une partie du temps pendant lequel ladite extrusion est effectuée, dans lequel on fait varier le débit volumétrique en faisant varier le volume interne d'une chambre à travers laquelle l'extrudat est amené à la buse.

16. Appareil selon la revendication 15, dans lequel le moyen pour faire varier en continu le débit volumétrique comprend un moyen pour faire varier le débit de pompage du moyen pour appliquer la pression.

17. Appareil selon la revendication 16, dans lequel le moyen pour appliquer la pression en continu comprend un moyen pour faire varier le volume interne d'une chambre à travers laquelle l'extrudat est amené à la buse à partir du moyen pour appliquer la pression.

18. Appareil selon l'une quelconque des revendications 15-17, dans lequel le moyen pour appliquer la pression comprend une pompe à déplacement positif.
